Europäisches Patentamt

European Patent Office

Office européen des brevets

(11) Publication number: **0 340 912**
**A2**

# (12) EUROPEAN PATENT APPLICATION

(21) Application number: 89303359.7

(22) Date of filing: 05.04.89

(51) Int. Cl.4: **H04B 7/08 , H04Q 7/04 , H04L 11/20**

(30) Priority: 06.05.88 GB 8810745

(43) Date of publication of application:
08.11.89 Bulletin 89/45

(84) Designated Contracting States:
AT BE CH DE ES FR GR IT LI LU NL SE

(71) Applicant: THE MARCONI COMPANY LIMITED
The Grove Warren Lane
Stanmore Middlesex HA7 4LY(GB)

(72) Inventor: Sosin, Boleslaw Marian
"Frampton" Main Road
Boreham Essex CM3 3JF(GB)
Inventor: Forsyth, Thomas Murray
17 Tythe Close
Chelmsford Essex(GB)

(74) Representative: Waters, Jeffrey et al
The General Electric Company plc Central
Patent Department Marconi Research Centre
West Hanningfield Road
Great Baddow Chelmsford Essex CM2
8HN(GB)

(54) Radio communication apparatus.

(57) In a radio communication system involving communication between a base station and a plurality of sub-stations, such as a cellular radio telephone system, the base station has a plurality of directional antennae 1a to 1f arranged to provide omnidirectional coverage. The signalling system uses time slots and more than one antenna may receive a signal in the same time slot. The signals are therefore combined via means which allows a signal from no more than one antenna to be passed in a given time slot, such as a series of switches 5a to 5f, only one of which is closed by a controller 9. The clashing signals may be fed via detectors 6a to 6f to the controller, which decides between them in some way.

FIG. 1.

FRAME 0 | FRAME 1
0 1 2 3 4 5 6 7 0 1 2 3 4 5 6 7 DOWNLINK

FRAME 0 | FRAME 1
0 1 2 3 4 5 6 7 0 1 2 3 4 UPLINK

## Radio Communication Apparatus

This invention relates to radio communication apparatus, and especially to such apparatus including at least one base station for use with a plurality of sub-stations.

It is known in a mobile radio telephone system to have at least one base station with a plurality of directional antennae with which users of fixed or mobile sub-stations can communicate.

To combine the signals received at the various antennae a commutator is used which connects to the various antennae in turn to receive the signals. Although such a system works satisfactorily to the extent that two sub-stations signalling to different antennae in an identical time slot do not clash because the commutator only connects to one antenna at a time, such a system does not lend itself to significantly increased speeds of operation.

The invention provides radio communication apparatus comprising a base station having a plurality of directional antennae for use with a plurality of sub-stations, the apparatus being such that in certain circumstances two or more sub-stations might use the same time slot for signalling to the base-station, and means for allowing the signal from no more than one antenna to be passed in a given time slot to an output thereby preventing a clash between two sub-stations signalling to different antennae in the same time slot.

Clashes are again avoided but without the inherent limitation on speed of operation in the prior art system referred to.

Advantageously the said means includes a switch associated with each antenna which is connected to the output and which is closed in response to the respective antenna receiving a signal from a sub-station, only one switch being closed in the event of two or more sub-stations signalling to different antennae in the same time slot.

There may be associated with each antenna, firstly, delay means to impart a delay to the reception by each switch of the signal from its respective antenna and, secondly, detector means to detect the reception of a signal by each antenna and to control the closing of switches so that only one switch closes even if two or more signals are received by each antenna in the same time slot.

A switch controller may be arranged to close the switches in the lines from the various antennae in a predetermined or random way to ensure that a switch closes if a signal is received from one antenna and only one switch closes if signals are received in the same time slot from more than one antenna. The controller may respond to the first signal received above a threshold level, since slight variations of the call signal in a slot will occur, or it may respond to the strongest signal, or it may scan rapidly the lines in turn and close the switch of the first line on which there is a signal.

The directional antennae of the base station are preferably directed about angles which are equally spaced in a circumferential direction around a vertical axis, and six or more may be provided.

The invention is particularly applicable to a time division multiple access (TDMA) system, and particularly to a telephone system, in which the sub-stations are fixed or mobile telephones.

A radio communication apparatus, which is part of a cellular mobile telephone system, constructed in accordance with the invention, will now be described by way of example with reference to the accompanying drawings, in which:

Figure 1 represents the time slotting of information into one down-link and one up-link channel;

Figure 2 is a block diagram of part of a base station; and

Figure 2a shows the gain of an automatic gain control circuit of figure 2.

The mobile cellular radio telephone system comprises a relatively small number of switching centres (not shown) which interface with the national telephone system, a larger number of omnidirectional base stations, which interface with the switching centres, and a large number of mobile telephones, which access their nearest base station. Each base station has six antennae directed in equi-spaced directions in a horizontal plane. More could be provided if desired. The system is duplex i.e. permits simultaneous two way traffic.

The down-link connection between the base station and the mobiles in range is on several radio frequency channels, and the up-link connection between the mobiles and the base station is on an equal number of radio frequency channels spaced in frequency from the respective down-link ones. Most of the channel pairs carry communication traffic, but one pair of channels is reserved for control purposes.

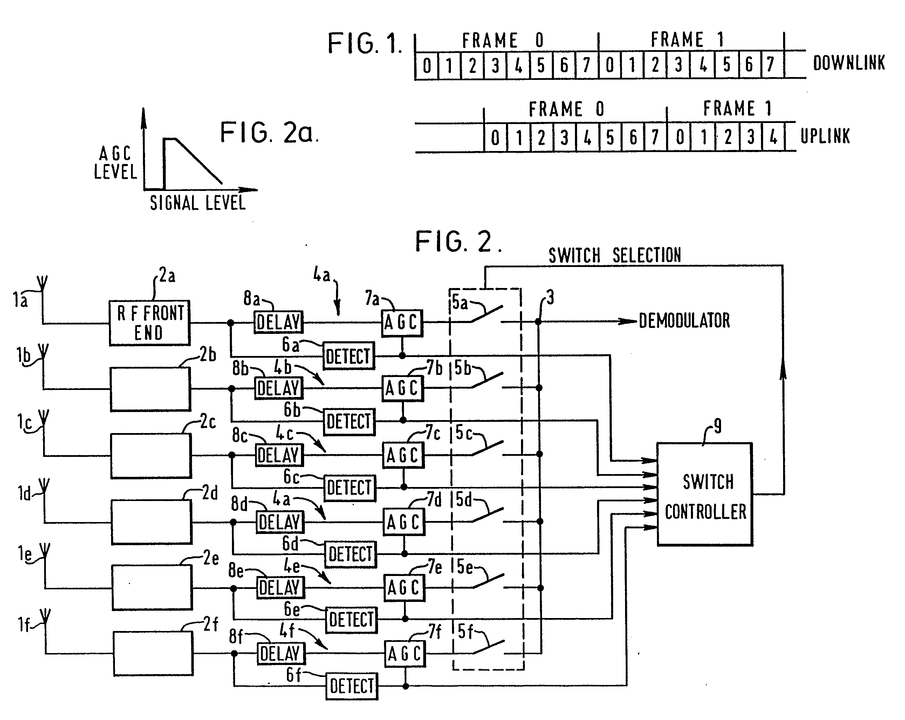

The system defines successive time frames of equal length, and eight time slots in each time frame. The start of the frames for the mobiles is delayed by three time slots with a respect to those for the base station (Figure 1).

A TDMA (time division multiple access) system is used in that traffic is allocated to particular time slots of successive frames eg. consecutive time slots 3 of the down-link. While in principle a call could occupy a time slot 3 on one rf channel throughout the length of the call, and another could occupy time slot 3 on another rf channel throughout the length of the call etc, in practice frequency hopping is used. Hence, each call takes place in a defined time slot and a defined rf channel sequence. There may of course be several calls in each time slot, subject to the overall number of available traffic channel pairs, each having a distinct rf sequence such that the same radio frequency is not used by more than one frequency sequence in the same frame. Calls are transmitted by modulated data bursts within the assigned time slots.

In the down-link control channel, the base station transmits control information to those mobiles in range. This information may be transmitted in time slot 0 or in time slots 2, 4, or 6. In particular, mobiles are instructed to register their identity, and the base station transmits information which enables the time slots and frames of the mobiles to be kept in synchronism with those of the base station (in synchronism, that is, at the base station, the time slots being advanced slightly at the mobiles to correct for propagation delay).

The mobiles make call requests on the up-link control channel. If a user wishes to make a call, he dials a number on his mobile and presses a send button. The mobile then sends a call request signal in time slot 0 or, optionally, in any one of time slots 0, 2, 4 or 6. If this message is successful, it leads to a sequence of events resulting in the allocation of a two-way traffic communication between that mobile and the base station as described above. However, whereas the resulting call is allocated a unique time slot and rf channel sequence, a call request is random in that several mobiles could make a call request in the same time slot in the same frame. If such call requests are made to the same antenna, all the call requests will fail. This invention is, however, concerned with preventing failure of all the clashing random access attempts where they are made to different antennae.

Referring to figure 2, each antenna 1a to 1f is connected to respective r.f. front end circuitry 2a to 2f. The lines are all connected to the same output 3 which leads to a demodulator, via respective feed forward AGC circuitry indicated generally by the reference numerals 4a to 4f and switches 5a to 5f. The gain of the AGC circuit is shown inset in figure 2a. No gain is applied below a certain threshold signal, after which the gain remains constant for a plateau (which could be short or even non-existent) after which, the output now being at an adequate level, the gain is inversely proportional to the signal strength to maintain the output at that level.

In order for the AGC to amplify the entire signal burst, detectors 6a to 6f set the gain in the AGC 7a to 7f before the signal enters the input, due to delays 8a to 8f.

The detectors 6a to 6f are also connected to a controller 9 which controls all the switches 5a to 5f.

In the event of the base station receiving a single (random access) call request during a particular time slot in a particular frame, a controller 9 closes the respective switch 5a to 5f and the respective signal passes to the demodulator.

In the event of the base station receiving two or more (random access) call requests via different antennae during the same slot in the same frame, if both respective switches 5a to 5f are closed together both signals would be fed to the demodulator and both would be rejected since the combined signal would be garbled.

To prevent this, the controller 9, in the event of two or more signals from different antennae being received in the same time slot, chooses one of the calls only in a predetermined or random way, and closes the respective switch 5a to 5f for that antenna only.

Various ways may be used of choosing between the signals. Thus, the call request signals from the mobile actually occupy slightly less than one time slot in order to accommodate propagation delays and for other reasons, and the controller 9 could simply choose the first signal to reach it. Alternatively, a predetermined ladder of delays could be applied to the signals to ensure that one must arrive before the others, and the switch of the first signal to arrive could again be chosen. Equally, the controller could make a random choice of competing lines e.g. by randomly numbering e.g. from 1 to 6 the clashing lines and choosing the largest or the smallest number. As another alternative, the controller could rapidly scan the lines in sequence and pick the first with a signal on it.

The percentage of successful call attempts will be increased particularly in heavy traffic conditions compared to the situation if no controller was provided and rejection of garbled (combined) signals was relied on, since one call request will always get through whereas otherwise no call request would get through and increased traffic would result from the automatic redialling and further call requests from each mobile.

The invention is applicable to radio communication systems in which the mobile telephones are replaced by fixed sub-stations, as well as to radio communication systems which are not cellular whether the sub-stations are fixed or not. The invention is also applicable to cellular and to non-cellular systems which use different slotting systems e.g. slotted ALOHA, whether dynamically expanded or otherwise.

**Claims**

1. Radio communication appartus comprising a base station having a plurality of directional antennae for use with a plurality of sub-stations, the apparatus being such that in certain circumstances two or more sub-stations might use the same time slot for signalling to the base-station, and means for allowing the signal from no more than one antenna to be passed in a given time slot to an output thereby preventing a clash between two sub-stations signalling to different antennae in the same time slot.

2. Apparatus as claimed in claim 1, wherein the said means includes a switch associated with each antenna which is connected to the output and which is closed in response to the respective antenna receiving a signal from a sub-station, only one switch being closed in the event of two or more sub-stations signalling to different antennae in the same time slot.

3. Apparatus as claimed in claim 1 or claim 2, in which delay means is associated with each switch to impart a delay to the reception by each switch of the signal from the respective antenna.

4. Apparatus as claimed in claim 3, in which the delay means forms part of a feed forward automatic gain control associated with each antenna.

5. Apparatus as claimed in claim 3 or claim 4, including detector means to detect the reception of a signal by each antenna and to control closing of the switches so that only one switch closes even if two or more signals are received by the antennae in the same time slot.

6. Apparatus as claimed in claim 5, in which the closing is controlled by a predetermined or random choice if two or more signals are detected by the detector means.

7. Apparatus as claimed in claim 6, in which the closing is controlled by reference to variations in the position of each signal in the time slot.

8. Apparatus as claimed in claim 6, in which the closing is controlled by reference to variations in the time of arrival of the signals, to which different delays have been applied.

9. Apparatus as claimed in claim 6, in which the closing is controlled by reference to the selection of two or more signals in turn.

10. A radio communication system comprising apparatus as claimed in any one of claims 1 to 9 in combination with a plurality of sub-stations.

FIG. 1.

FIG. 2a.

FIG. 2.

EP 0 340 912 A2